# EUROPÄISCHE PATENTSCHRIFT

(11) **EP 4 039 913 B1**
(45) Veröffentlichungstag und Bekanntmachung des Hinweises auf die Patenterteilung: **14.06.2023**
(21) Anmeldenummer: 22165642.4
(22) Anmeldetag: 30.09.2016
(51) Int. Cl.: E04G 25/06, F16B 7/18

(54) **BAUSTÜTZE**
BUILDING SUPPORT
ÉLÉMENT DE SUPPORT

(30) Priorität: 01.10.2015 DE 102015219043
(43) Veröffentlichungstag der Anmeldung: 10.08.2022
(62) Teilanmeldung aus: 16774951.4
(73) Patentinhaber: DOKA GmbH, 3300 Amstetten (AT)
(72) Erfinder: HANDVEST, Werner, 89264 Weißendorn (DE)
(74) Vertreter: SONN Patentanwälte OG

(56) Entgegenhaltungen:
- WO-A2-2007/039422
- DE-A1- 19 503 296
- DE-A1-102012 211 384

## Beschreibung

Die Erfindung betrifft eine Baustütze, mit einer axialen Längsrichtung, einer dazu konzentrischen Umfangsrichtung und einer radialen Richtung, mit einem in der Längsrichtung erstreckten Außenrohr, einem darin angeordneten in der Längsrichtung erstreckten und gegenüber dem Außenrohr in der Längsrichtung verstellbaren Innenrohr mit einem Außengewinde, wobei das Außenrohr ein unrundes gewalztes Rohr ist und das Außenrohr im Zuge der Walz-Herstellung mit wenigstens einer in der Längsrichtung erstreckten und nach radial innen öffnenden Führungsnut versehen ist, wobei das Innenrohr wenigstens ein nach radial außen vorstehendes Führungselement aufweist, welches in die nach radial innen geöffnete Führungsnut eingreift, sodass das Innenrohr dadurch in Umfangsrichtung formschlüssig verdrehsicher im Außenrohr angeordnet ist, wobei in einem Längsendbereich des Außenrohrs verliersicher, jedoch in Umfangsrichtung drehbar eine Stellmutter mit einem mit dem Außengewinde des Innenrohrs verschraubbaren Innengewinde angeordnet ist, wobei durch Drehen der Stellmutter das Innenrohr relativ zu dem Außenrohr in Längsrichtung verstellbar ist, wobei das Führungselement in der Führungsnut gleitet, wobei der Längsendbereich des Außenrohrs umlegbare Mittel aufweist, die ein Sicherungselement für die Stellmutter bilden, wobei die umlegbaren Mittel des Längsendbereichs des Außenrohrs von einem nach radial außen vorstehenden Abschnitt mit wenigstens einem nach radial innen in einen axialen Hintergriff mit der Stellmutter umlegbaren Ansatz gebildet sind.

Derartige Baustützen sind in großem Umfang bekannt.

Baustützen sind beispielsweise aus DE 10 2012 211384 A1, WO 2007/039422 A2 oder DE 195 03 296 A1 bekannt.

Der vorliegenden Erfindung liegt die Aufgabe zugrunde, eine Baustütze zu schaffen, die stabil und bedienungsfreundlich handhabbar und kostengünstig herstellbar ist.

Diese Aufgabe wird durch eine Baustütze nach Anspruch 1 gelöst. Erfindungsgemäß ist vorgesehen, dass das Innenrohr ein Rundrohr ist und die umlegbaren Mittel durch Anschweißen von flanschartigen Abschnitten ausgebildet sind oder von einer nach radial außen gerichteten Verformung einstückig aus dem Material des Außenrohrs gebildet sind.

Gemäß der Erfindung ist das Außenrohr kostengünstig in einem Walzverfahren hergestellt. Im Zuge des Walzverfahrens wird das Rohr mit der mindestens einen nach radial innen öffnenden und in Längsrichtung erstreckten Führungsnut versehen. Durch die Führungsnut weist das Außenrohr ein unrundes Profil zur Aufnahme des Führungselements auf. Dadurch ist eine Verdrehsicherung des Innenrohrs in dem Außenrohr realisiert.

Bei der erfindungsgemäßen Ausbildung der Baustütze erfolgt die Verstellung des Innenrohrs in Längsrichtung relativ zum Außenrohr, und damit die Längsverstellung der Baustütze, durch Drehen der Stellmutter. Das Innenrohr wird dadurch translatorisch in Längsrichtung relativ zu dem Außenrohr verstellt, wobei das Führungselement des Innenrohrs axial in der Führungsnut des Außenrohrs gleitet. Gleichzeitig wird durch die Stellmutter das Innenrohr in axialer Längsrichtung fixiert, und ein unerwünschtes translatorisches Ein- bzw. Ausfallen des Innenrohrs in bzw. aus dem Außenrohr wird sicher verhindert.

Es erweist sich als besonders vorteilhaft, wenn das Außenrohr aus einer Stahllegierung gefertigt und zum Schutz vor Korrosion vorzugsweise verzinkt ist.

Das Innenrohr ist vorzugsweise aus einer Stahllegierung gefertigt. Es erweist sich als vorteilhaft, wenn das Innenrohr auch in einem Walzverfahren und in verzinkter Ausführung hergestellt ist.

Das Außengewinde des Innenrohrs ist vorteilhafterweise in einem spanlosen Formgebungsverfahren, insbesondere einem Gewinde-Walzverfahren oder einem Gewinde-Rollverfahren, hergestellt.

Es erweist sich als ganz besonders vorteilhaft, dass das Außenrohr mehrere, vorzugsweise zwei, drei oder vier, in der Längsrichtung erstreckte Führungsnuten umfasst, und dass das Innenrohr dementsprechend mehrere, vorzugsweise zwei, drei oder vier, in diese Führungsnuten eingreifende Führungselemente aufweist. Durch die in die Führungsnuten eingreifenden Führungselemente ist das Innenrohr in Umfangsrichtung verdrehsicher im Außenrohr angeordnet.

Das Führungselement des Innenrohrs kann in vielfacher Weise realisiert sein. Denkbar ist, dass das Führungselement durch Hinzufügen von Material, beispielsweise durch Anschweißen von flügelartigen Erweiterungselementen ausgebildet ist.

Vorzugsweise ist das Führungselement durch eine nach radial außen gerichtete Verformung von Material des Innenrohrs, zum Beispiel durch punktförmige Materialverformung in Form einer nach radial außen gedrückten Warze, gebildet. Gemäß einer bevorzugten Ausführungsform wird das Führungselement einstückig aus dem Material des Innenrohrs durch Einschneiden und nach radial außen Aufweiten oder Umbiegen geformt.

Bei einer weiteren bevorzugten Ausführungsform ist das Führungselement von wenigstens einem, vorzugsweise zwei, Stiften gebildet. Die Stifte sind durch eine jeweilige Öffnung im Innenrohr hindurchgesteckt und stehen nach radial außen vor.

Um eine axiale Verstellbarkeit des Innenrohrs relativ zu dem Außenrohr über eine möglichst große Weglänge zu gewährleisten, erweist es sich als vorteilhaft, dass sich das Außengewinde des Innenrohrs über eine möglichst große Länge des Innenrohrs erstreckt.

Weiter erweist es sich als besonders vorteilhaft, dass das Führungselement in oder an einem in dem Außenrohr angeordneten Längsendbereich des Innenrohrs ausgebildet ist. Vorzugsweise erstreckt sich dieser Längsendbereich des Innenrohrs von einem, in dem Außenrohr angeordneten Ende des Innenrohrs über 30cm in Längsrichtung und das Führungselement ist innerhalb des Längsendbereichs angeordnet.

Um ein unbeabsichtigtes Ausdrehen der Stellmutter zu verhindern, ist es denkbar, dass das Außengewinde des Innenrohrs durch einen Schweißpunkt oder Quetschung begrenzt ist. In einer bevorzugten Ausführungsform ist am Innenrohr ein gewindefreier Teil vorgesehen. Insbesondere endet das Außengewinde in einem Bereich von wenigstens 30 cm vor dem Ende des Innenrohrs.

Wie eingangs erwähnt, ist die Stellmutter verliersicher am Außenrohr angeordnet. Gemäß einer bevorzugten Ausführungsform ist die Stellmutter mittels eines Sicherungselements in axialer Richtung formschlüssig, jedoch spielbehaftet und in Umfangsrichtung drehbar am Außenrohr angeordnet. Das Sicherungselement ist bei einer nicht beanspruchten Ausführungsform in axialer Richtung formschlüssig an dem Außenrohr gehalten. Denkbar ist, dass das Sicherungselement z.B. durch stoffschlüssiges Verbinden, am Außenrohr gehalten ist.

Das Sicherungselement ist in verschiedener Weise realisierbar und kann verschiedenartig geformt, beispielsweise U-förmig, ausgebildet sein. Bei einer nicht beanspruchten Ausführungsform ist das Sicherungselement aber ein das Außenrohr umfassender Sicherungsring.

Bei einer nicht beanspruchten Ausführungsform weist das Außenrohr im Längsendbereich einen Stützabschnitt zur Anlage des Sicherungselements von axial unten auf. Der Stützabschnitt kann auf verschiedene Weise, insbesondere durch Hinzufügen von Material, beispielsweise durch Anschweißen von flügelartigen oder ringförmigen Erweiterungsstücken realisiert sein. Vorzugsweise ist der Stützabschnitt durch eine nach radial außen gerichtete Verformung von Material des Außenrohrs gebildet. Besonders bevorzugt ist der Stützabschnitt einstückig aus Material des Außenrohrs, vorzugsweise durch Einschneiden und Umbiegen, gebildet. Es ist durchaus denkbar, dass die Stellmutter auf dem Stützabschnitt des Außenrohrs von axial oben aufsitzt.

Nach Einführen des Innenrohrs in das Außenrohr, wird die Stellmutter mit dem Sicherungselement formschlüssig verbunden. Vorteilhafterweise weist das Sicherungselement wenigstens einen nach radial innen in eine axiale Hintergriffstellung mit der der Stellmutter umlegbaren Ansatz auf. Denkbar ist, dass der nach radial innen umlegbare Ansatz des Sicherungselements mit einem Rand der Stellmutter aufgebördelt ist. Vorzugsweise greift der nach radial innen umlegbare Ansatz in eine Umfangsnut der Stellmutter formschlüssig ein.

Erfindungsgemäß bildet der Längsendbereich des Außenrohrs selbst ein Sicherungselement für die Stellmutter. Der Längsendbereich weist dazu umlegbare Mittel auf. Bei einer erfindungsgemäßen Variante ist vorgesehen, dass die umlegbaren Mittel durch Anschweißen von flanschartigen Abschnitten ausgebildet sind. Bei einer anderen erfindungsgemäßen Variante sind die umlegbaren Mittel von einer nach radial außen gerichteten Verformung einstückig aus dem Material des Außenrohrs gebildet.

Die umlegbaren Mittel des Längsendbereichs sind von wenigstens einem nach radial außen vorstehender Abschnitt mit wenigstens einem nach radial innen in eine axiale Hintergriffstellung mit der Stellmutter umlegbaren Ansatz gebildet. Vorzugsweise greift der nach radial innen umlegbare Ansatz in eine Umfangsnut der Stellmutter ein.

Ferner erweist es sich als ganz besonders vorteilhaft, wenn die Stellmutter mehrere, vorzugsweise drei oder vier, Werkzeugansetzstellen, insbesondere flügelartige Hammeranschlagflächen, umfasst.

Für den zweckmäßigen Einsatz der Baustütze erweist es sich als vorteilhaft, wenn das Außenrohr und das Innenrohr eine Aufnahme für eine Fußplatte und eine Kopfplatte aufweisen und die Fuß- und Kopfplatte derart ausgebildet ist, dass ein weiteres Fuß- und Kopfteil, insbesondere zentrisch, daran befestigt werden kann.

Bevorzugte Weiterbildungen sind in den abhängigen Ansprüchen beschrieben, für die in beliebiger Kombination Schutz in Anspruch genommen wird. Einzelheiten ergeben sich aus der zeichnerischen Darstellung und nachfolgenden Beschreibung eines bevorzugten Ausführungsbeispiels der erfindungsgemäßen Baustütze. In der Zeichnung zeigt:
- Figur 1: einen Ausschnitt einer Seitenansicht der erfindungsgemäßen Baustütze gemäß einer bevorzugten Ausführungsform;
- Figur 2a: eine Seitenansicht eines Außenrohrs;
- Figur 2b: einen Querschnitt durch ein Außenrohr;
- Figur 2c: eine Detailansicht eines Außenrohrs;
- Figur 3a: eine Seitenansicht eines Innenrohrs;
- Figur 3b: einen Querschnitt durch ein Innenrohr;
- Figur 3c: einen Querschnitt durch ein Innenrohr gemäß einer weiteren Ausführungsform;
- Figur 4a: eine Seitenansicht einer Stellmutter gemäß einer bevorzugten Ausführungsform;
- Figur 4b: eine Draufsicht aus axialer Richtung auf eine Stellmutter gemäß Fig. 4a;
- Figur 5: eine geschnittene Seitenansicht einer erfindungsgemäßen Baustütze;
- Figur 6a: eine Seitenansicht eines Sicherungselements gemäß einer bevorzugten Ausführungsform, und
- Figur 6b: eine Draufsicht aus axialer Richtung auf ein Sicherungselement gemäß Fig. 6a;
- Figur 6c: eine Seitenansicht eines Sicherungselements gemäß einer weiteren Ausführungsform;
- Figur 6d: eine Seitenansicht eines Sicherungselements gemäß Fig. 6c mit einer Stellmutter;

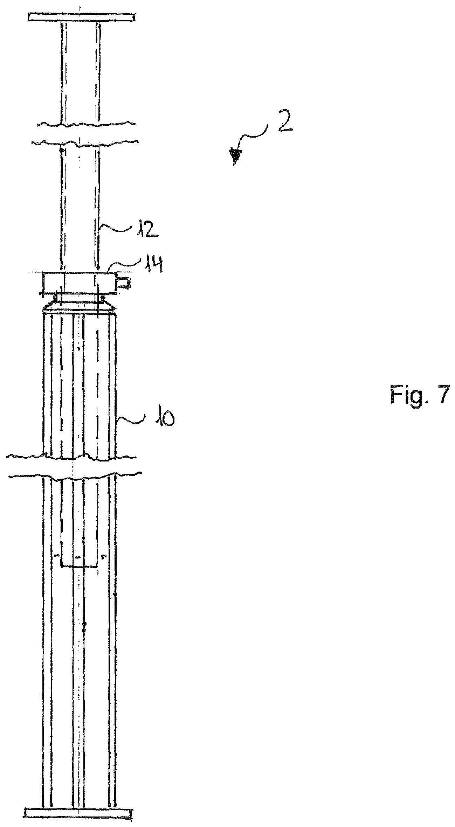

- Figur 7: eine Seitenansicht der erfindungsgemäßen Baustütze gemäß einer bevorzugten Ausführungsform.

In den Figuren sind Ausführungsformen der Baustütze gezeigt, die einen Sicherungsring als Sicherungselement zeigen. Diese Ausführungsformen dienen zum besseren Verständnis für die Erfindung, werden aber nicht beansprucht.

Die Figuren zeigen eine insgesamt mit dem Bezugszeichen 2 bezeichnete Baustütze mit einer axialen Längsrichtung 4, einer dazu konzentrischen Umfangsrichtung 6 und einer radialen Richtung 8. Die Baustütze 2 umfasst ein in der Längsrichtung 4 erstrecktes Außenrohr 10 und ein darin angeordnetes Innenrohr 12. Ferner umfasst die Baustütze 2 eine Stellmutter 14, die in einem Längsendbereich 16 des Außenrohrs 10 auf noch näher zu beschreibende Weise verliersicher, jedoch in Umfangsrichtung 6 drehbar angeordnet ist und. mittels derer das Innenrohr 12 relativ zum Außenrohr 10 in der axialen Längsrichtung 4 verstellbar ist.

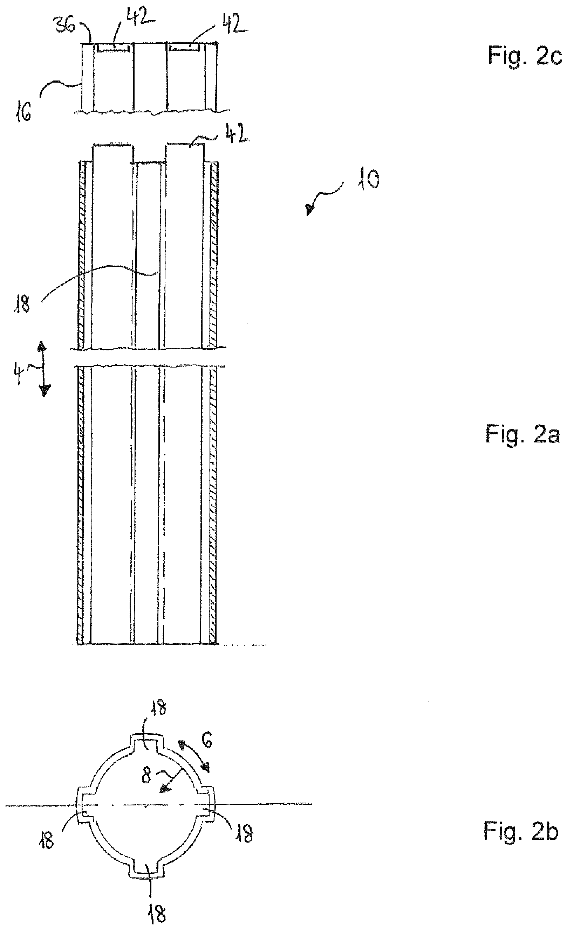

Das Außenrohr 10 ist im Zuge der Walzherstellung mit mindestens einer und nach einer bevorzugten Ausführungsform gemäß den Figuren 2a und 2b mit vier in axialer Richtung 4 erstreckten Längsführungsnuten 18 versehen und weist dadurch ein unrundes Profil auf. Die Längsführungsnuten 18 öffnen nach radial innen und sind um jeweils 90° versetzt zueinander angeordnet. Sind zwei bzw. drei Längsführungsnuten 18 vorgesehen, kann es aus Symmetriegründen zweckmäßig sein, diese diametral gegenüber bzw. um 120° zueinander versetzt anzuordnen.

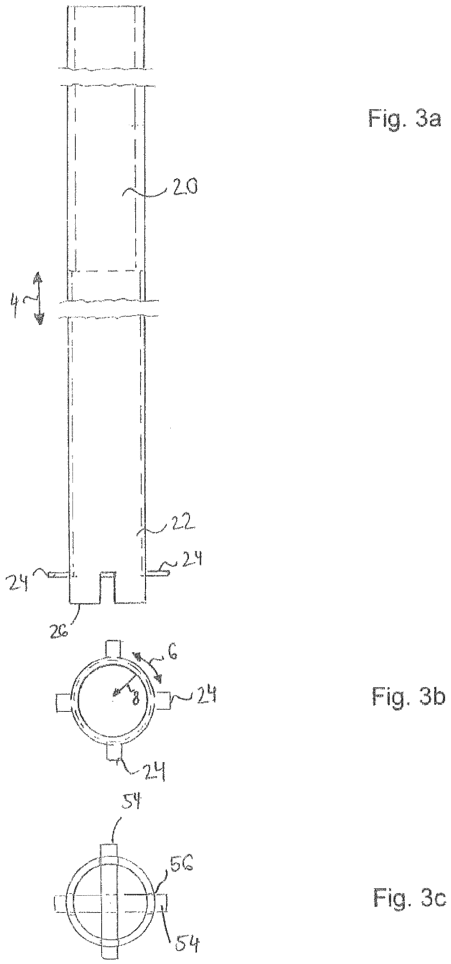

Das Innenrohr 12 ist ein Rundrohr mit einem Außengewinde 20. Es ist bei einer bevorzugten Ausführungsform nach Figuren 3a und 3b in einem gewindefreien Längsendbereich 22 mit vier nach radial außen vorstehenden Führungselementen 24 versehen. Die Führungselemente 24 sind entsprechend den Längsführungsnuten 18 um jeweils 90° versetzt zueinander angeordnet. Die Führungselemente 24 sind einstückig aus Material des Innenrohrs 12 durch Einschneiden an einem unteren Rand 26 und Umbiegen nach radial innen gebildet. Ist das Innenrohr 12 in dem Außenrohr 10 eingesteckt, greifen die Führungselemente 24 von radial innen in die Längsführungsnuten 18 ein. Das Innenrohr 12 ist dadurch verdrehsicher in dem Außenrohr 10 angeordnet.

In einer weiteren bevorzugten Ausführungsform gemäß Fig. 3c sind die Führungselemente 24 von zwei Stiften 54 gebildet. Die Stifte 54 sind durch eine jeweilige Öffnung 56 im Innenrohr 12 hindurchgesteckt und stehen nach radial außen vor. Ist das Innenrohr 12 in dem Außenrohr 10 eingesteckt, greifen die die nach radial außen vorstehenden Stifte 54 von radial innen in die Längsführungsnuten 18 ein. Das Innenrohr 12 ist dadurch verdrehsicher in dem Außenrohr 10 angeordnet.

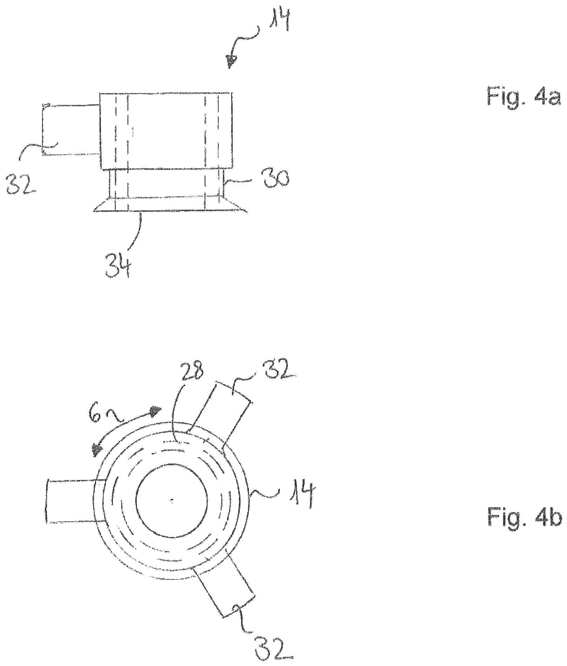

Die Stellmutter 14 umfasst ein auf das Außengewinde 20 des Innenrohrs 12 aufschraubbares Innengewinde 28 und eine Umfangsnut 30. Ferner umfasst die Stellmutter 14 gemäß einer bevorzugten Ausführungsform nach Figur 4b mehrere, insbesondere drei, Werkzeugansetzstellen 32. Als vorteilhaft erweisen sich flügelartige Hammeranschlagsflächen.

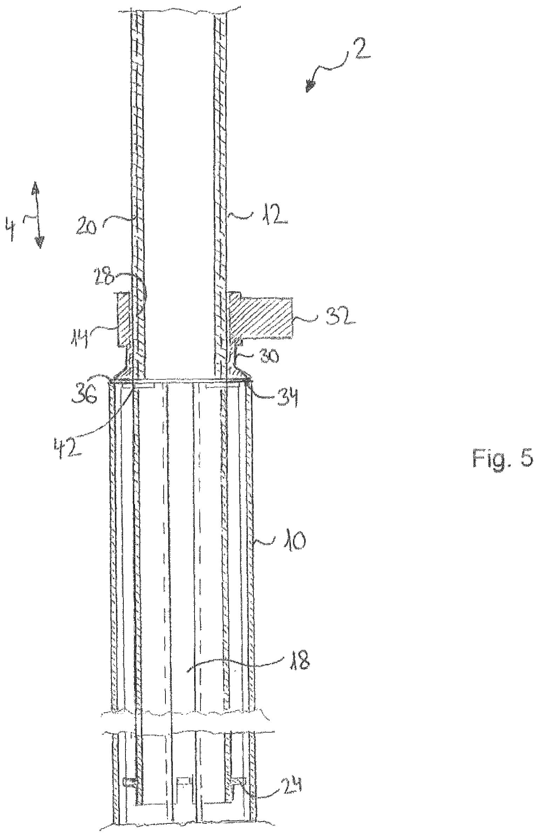

Figur 5 zeigt die erfindungsgemäße Baustütze 2, wobei das Innenrohr 12 in dem Außenrohr 10 angeordnet ist. Die Stellmutter 14 ist auf das Innenrohr aufgeschraubt und sitzt gemäß der in Figur 5 gezeigten Position mit einem unteren Ende 34 auf einem oberen Ende 36 im Längsendbereich 16 des Außenrohrs 10 auf. Die Führungselemente 24 des Innenrohrs 12 greifen in die Längsführungsnuten 18 des Außenrohrs 10 ein. Durch Drehen der Stellmutter 14 verstellt sich das Innenrohr 12 in axialer Längsrichtung 4 relativ zu dem Außenrohr 10. Die Führungselemente 24 gleiten in den Längsführungsnuten 18, dadurch bewegt sich das Innenrohr 12 durch Drehen der Stellmutter 14 translatorisch relativ zum Außenrohr 10. Gleichzeitig wird das in die Stellmutter 14 eingeschraubte Innenrohr 12, von der Stellmutter 14 in axialer Längsrichtung 4 fixiert, da die Stellmutter 14 auf noch näher zu beschreibende Weise verliersicher am Außenrohr 10 gehalten ist. Ein unerwünschtes translatorisches Ein- bzw. Ausfallen des Innenrohrs 12 in bzw. aus dem Außenrohr 10 verhindert, da sich das Innenrohr 12 nur über das Drehen der Stellmutter 14 in Längsrichtung 4 verstellen lässt.

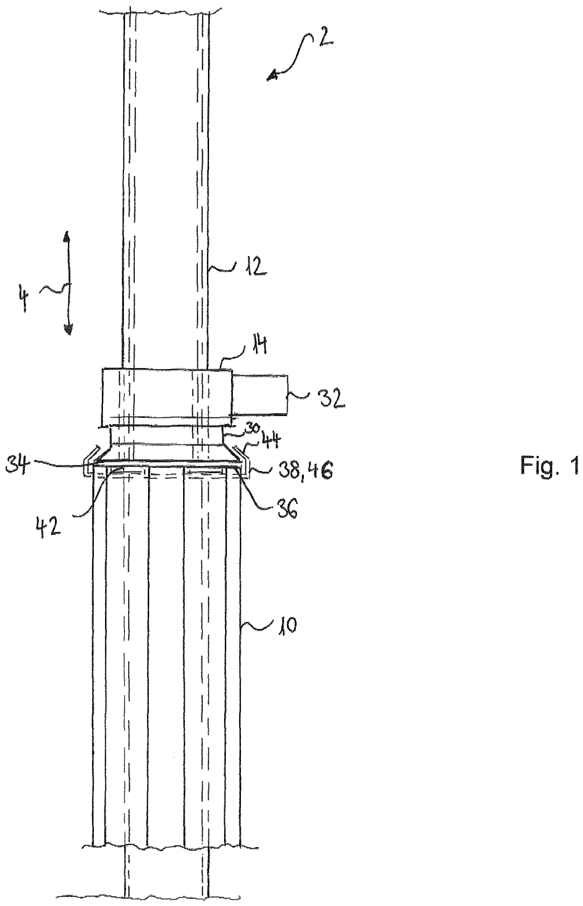

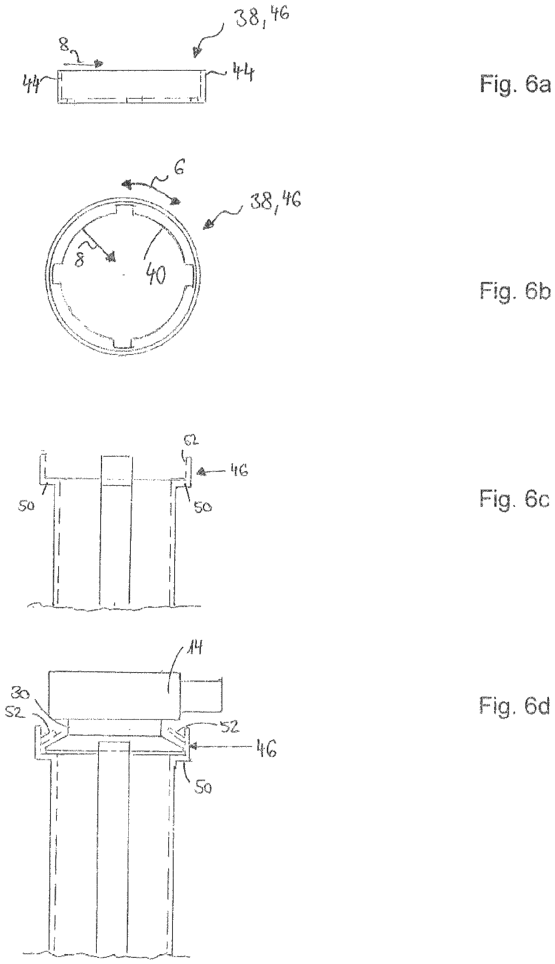

Die Stellmutter 14 ist gemäß Figur 1 mittels eines Sicherungsrings 38 in axialer Richtung formschlüssig, jedoch spielbehaftet und in Umfangsrichtung drehbar am Außenrohr 10 angeordnet. Der Sicherungsring 38 umfasst das Außenrohr 10 und weist gemäß Figur 6b ein mit dem unrunden Profil des Außenrohrs 10 zusammenwirkendes Innenprofil 40 auf. Die dargestellten Ausführungen mit dem Sicherungsring 38 werden nicht beansprucht, aber dienen dem besseren Verständnis.

Bei einer nicht beanspruchten Ausführungsform sind am Außenrohr 10 Stützabschnitte 42 vorgesehen. Insbesondere die Figuren 2a und 2c zeigen die Stützabschnitte 42 im Längsendbereich 16 des Außenrohrs 10. Vorzugsweise sind die Stützabschnitte 42 einstückig aus Material des Außenrohrs gebildet. Das Außenrohr 10 wird von axial oben im Bereich zwischen den Längsführungsnuten 18 eingeschnitten, sodass vier zungenartige Abschnitte stehen bleiben. Diese werden derart gebogen, dass sie nach radial außen abstehende Stützabschnitte 42 bilden. Vorzugsweise wird zuerst der Sicherungsring 38 von axial oben auf das Außenrohr gesteckt und anschließend die Stützabschnitte 42 ausgebildet, sodass der Sicherungsring 38 von axial unten an den Stützabschnitten 42 anliegt. Ist das Innenrohr 12 mit der aufgeschraubten Stellmutter 14 gemäß Figur 1 in dem Außenrohr positioniert, sitzt die Stellmutter 14 von axial oben auf den Stützabschnitten 42 auf und die nach radial innen umlegbaren Ansätze 44 des Sicherungsrings 38 werden derart nach radial innen gebogen, dass die Ansätze 44 in eine Umfangsnut 30 der Stellmutter 14 eingreifen. Die Stellmutter 14 ist also über den von axial unten an den Stützabschnitten 42 anliegenden Sicherungsring und über die in die Umfangsnut 30 eingreifenden Ansätze 44 des Sicherungsrings verliersicher am Außenrohr 10 gehalten. Die Ansätze 44 greifen derart spielbehaftet in die Umfangsnut 30 ein, sodass die Stellmutter 14 in Umfangsrichtung 6 verdrehbar ist, und das Innenrohr 12 durch Drehen der Stellmutter 14 relativ zum Außenrohr 10 in Längsrichtung 4 verstellbar ist.

Gemäß einer bevorzugten Ausführungsform ist das Sicherungselement 46 von dem Längsendbereich 16 des Außenrohrs 10 gebildet. Die Fig. 6c und 6d zeigen den Längsendbereich 16 des Außenrohrs mit umlegbaren Mittel 48. Das Außenrohr 10 wird von axial oben im Bereich zwischen den Längsführungsnuten 18 eingeschnitten, sodass mehrere umlegbare Mittel 48 stehen bleiben. Diese werden derart gebogen, dass sie nach radial außen stehende Abschnitte 50 mit nach radial innen umlegbaren Ansätzen 52 bilden. Die nach radial innen umlegbaren Ansätze 52 greifen derart spielbehaftet in die Umfangsnut 30 ein, sodass die Stellmutter 14 in Umfangsrichtung 6 verdrehbar ist, und das Innenrohr 12 durch Drehen der Stellmutter 14 relativ zum Außenrohr 10 in Längsrichtung 4 verstellbar ist.

## Patentansprüche

1. Baustütze (2), mit einer axialen Längsrichtung (4), einer dazu konzentrischen Umfangsrichtung (6) und einer radialen Richtung (8), mit einem in der Längsrichtung (4) erstreckten Außenrohr (10), einem darin angeordneten in der Längsrichtung (4) erstreckten und gegenüber dem Außenrohr (10) in der Längsrichtung (4) verstellbaren Innenrohr (12) mit einem Außengewinde (20), wobei das Außenrohr (10) ein unrundes gewalztes Rohr ist und das Außenrohr (10) im Zuge der Walz-Herstellung mit wenigstens einer in der Längsrichtung (4) erstreckten und nach radial innen öffnenden Führungsnut (18) versehen ist, wobei das Innenrohr (12) wenigstens ein nach radial außen vorstehendes Führungselement (24) aufweist, welches in die nach radial innen geöffnete Führungsnut (18) eingreift, sodass das Innenrohr (12) dadurch in Umfangsrichtung (6) formschlüssig verdrehsicher im Außenrohr (10) angeordnet ist, wobei in einem Längsendbereich (16) des Außenrohrs (10) verliersicher, jedoch in Umfangsrichtung (6) drehbar eine Stellmutter (14) mit einem mit dem Außengewinde (20) des Innenrohrs (12) verschraubbaren Innengewinde (28) angeordnet ist, wobei durch Drehen der Stellmutter (14) das Innenrohr (12) relativ zu dem Außenrohr (10) in Längsrichtung (4) verstellbar ist, wobei das Führungselement (14) in der Führungsnut (18) gleitet, wobei der Längsendbereich (16) des Außenrohrs (10) umlegbare Mittel (48) aufweist, die ein Sicherungselement (46) für die Stellmutter bilden, wobei die umlegbaren Mittel (48) des Längsendbereichs (16) des Außenrohrs (10) von einem nach radial außen vorstehenden Abschnitt (50) mit wenigstens einem nach radial innen in einen axialen Hintergriff mit der Stellmutter (14) umlegbaren Ansatz (52) gebildet sind, **dadurch gekennzeichnet, dass** das Innenrohr (12) ein Rundrohr ist und die umlegbaren Mittel (48) durch Anschweißen von flanschartigen Abschnitten ausgebildet sind oder von einer nach radial außen gerichteten Verformung einstückig aus dem Material des Außenrohrs (10) gebildet sind.

2. Baustütze (2) nach Anspruch 1, **dadurch gekennzeichnet, dass** das Außenrohr (10) aus einer Stahllegierung gefertigt und vorzugsweise verzinkt ist und/oder dass das Innenrohr (12) vorzugsweise aus einer Stahllegierung gefertigt ist.

3. Baustütze (2) nach einem oder mehreren der vorhergehenden Ansprüche, **dadurch gekennzeichnet, dass** das Außengewinde (20) des Innenrohrs (12) in einem spanlosen Formgebungsverfahren, insbesondere einem Gewinde-Walzverfahren oder einem Gewinde-Rollverfahren, hergestellt ist.

4. Baustütze (2) nach einem oder mehreren der vorhergehenden Ansprüche, **dadurch gekennzeichnet, dass** das Außenrohr (10) mehrere, vorzugsweise zwei, drei oder vier, in der Längsrichtung (4) erstreckte Führungsnuten (18) umfasst, und dass das Innenrohr (12) dementsprechend mehrere, vorzugsweise zwei, drei oder vier, in diese Führungsnuten (18) eingreifende Führungselemente (24) aufweist.

5. Baustütze (2) nach einem oder mehreren der vorhergehenden Ansprüche, **dadurch gekennzeichnet, dass** das Führungselement (24) des Innenrohrs (12) durch eine nach radial außen gerichtete Verformung von Material des Innenrohrs (12) gebildet ist und/oder dass das Führungselement (24) durch Einschneiden und anschließend nach außen Aufweiten oder Umbiegen von Material des Innenrohrs (12) gefertigt ist.

6. Baustütze (2) nach einem oder mehreren der vorhergehenden Ansprüche, **dadurch gekennzeichnet, dass** das Führungselement (24) in oder an einem in dem Außenrohr (10) angeordneten Längsendbereich (22) des Innenrohrs (12) ausgebildet ist.

7. Baustütze (2) nach einem oder mehreren der vorhergehenden Ansprüche, **dadurch gekennzeichnet, dass** das Führungselement (24) von wenigstens einem durch eine Öffnung (56) im Innenrohr (12) hindurchgesteckten und nach radial außen vorstehenden Stift (54) gebildet ist.

8. Baustütze (2) nach einem oder mehreren der vorhergehenden Ansprüche, **dadurch gekennzeichnet, dass** die Stellmutter (14) mehrere, insbesondere drei, Werkzeugansetzstellen (32), insbesondere flügelartige Hammeranschlagflächen, umfasst.

9. Baustütze (2) nach einem oder mehreren der vorhergehenden Ansprüche, **dadurch gekennzeichnet, dass** das Außenrohr (10) und/oder Innenrohr (12) eine Aufnahme für eine Fußplatte und/oder eine Kopfplatte aufweisen und die Fuß- und/oder Kopfplatte derart ausgebildet ist, dass ein weiteres Fuß- und/oder Kopfteil, insbesondere zentrisch, daran befestigt werden kann.

## Claims

1. Construction support (2), having an axial longitudinal direction (4), a circumferential direction (6) concentric thereto, and a radial direction (8), having an outer tube (10) extending in the longitudinal direction (4) and an inner tube (12), arranged therein, which extends in the longitudinal direction (4), is adjustable relative to the outer tube (10) in the longitudinal direction (4) and has an external thread (20), the outer tube (10) being a non-round rolled tube and the outer tube (10), during rolling production, is provided with at least one guide groove (18) which extends in the longitudinal direction (4) and opens radially inwards, the inner tube (12) having at least one radially outwardly projecting guide element (24), which engages in the radially inwardly open guide groove (18), such that the inner tube (12) is arranged in the outer tube (10) form-fittingly and non-rotationally in the circumferential direction (6), an adjustment nut (14) being arranged in a longitudinal end region (16) of the outer tube (10) so as to be captive but rotatable in the circumferential direction (6), the adjustment nut having an inner thread (28) which can be screwed to the outer thread (20) of the inner tube (12), the inner tube (12) being adjustable in the longitudinal direction (4) relative to the outer tube (10) by rotation of the adjustment nut (14), the guide element (14) sliding in the guide groove (18), the longitudinal end region (16) of the outer tube (10) having foldable means (48) which form a securing element (46) for the adjustment nut, the foldable means (48) of the longitudinal end region (16) of the outer tube (10) being formed by a radially outwardly projecting portion (50) having at least one projection (52) which can be folded radially inwards into axial rear engagement with the adjustment nut (14), **characterised in that** the inner tube (12) is a round tube and the foldable means (48) are formed by welding flange-like portions or are formed in one piece from the material of the outer tube (10) by a radially outwardly directed deformation.

2. Construction support (2) according to claim 1, **characterised in that** the outer tube (10) is made of a steel alloy and is preferably galvanised **and/or in that** the inner tube (12) is preferably made of a steel alloy.

3. Construction support (2) according to one or more of the preceding claims, **characterised in that** the external thread (20) of the inner tube (12) is produced in a non-cutting shaping process, in particular a thread rolling process or a thread roller process.

4. Construction support (2) according to one or more of the preceding claims, **characterised in that** the outer tube (10) comprises a plurality of, preferably two, three or four, guide grooves (18) extending in the longitudinal direction (4), **and in that** the inner tube (12) accordingly has a plurality of, preferably two, three or four, guide elements (24) engaging in these guide grooves (18).

5. Construction support (2) according to one or more of the preceding claims, **characterised in that** the guide element (24) of the inner tube (12) is formed by a radially outwardly directed deformation of material of the inner tube (12) **and/or in that** the guide element (24) is produced by cutting and then widening or bending material away from the inner tube (12).

6. Construction support (2) according to one or more of the preceding claims, **characterised in that** the guide element (24) is formed in or on a longitudinal end region (22) of the inner tube (12) arranged in the outer tube (10).

7. Construction support (2) according to one or more of the preceding claims, **characterised in that** the guide element (24) is formed by at least one pin (54) which is inserted through an opening (56) in the inner tube (12) and projects radially outwards.

8. Construction support (2) according to one or more of the preceding claims, **characterised in that** the adjustment nut (14) comprises a plurality of, in particular three, tool attachment points (32), in particular wing-like hammer stop surfaces.

9. Construction support (2) according to one or more of the preceding claims, **characterised in that** the outer tube (10) and/or the inner tube (12) have a receptacle for a foot plate and/or a head plate and the foot plate and/or head plate is designed such that a further foot plate and/or head part can be fastened thereto, in particular centrally.

## Revendications

1. Etai (2) avec un sens longitudinal (4) axial, un sens périphérique (6) concentrique par rapport à celui-ci et un sens radial (8), avec un tube externe (10) s'étendant dans le sens longitudinal (4), un tube interne (12) disposé dans celui-ci, s'étendant dans le sens longitudinal (4) et ajustable dans le sens longitudinal (4) par rapport au tube externe (10) avec un filetage extérieur (20), dans lequel le tube externe (10) est un tube laminé non rond et le tube externe (10) est pourvu, dans le cadre de la fabrication par laminage, d'au moins une rainure de guidage (18) s'étendant dans le sens longitudinal (4) et s'ouvrant vers l'intérieur radialement, dans lequel le tube interne (12) présente au moins un élément de guidage (24) faisant saillie vers l'extérieur radialement, lequel vient en prise avec la rainure de guidage (18) ouverte vers l'intérieur radialement, si bien que le tube interne (12) est disposé dans le tube externe (10) de manière bloquée en rotation par complémentarité de forme dans le sens périphérique (6), dans lequel un écrou de réglage (14) avec un filetage intérieur (28) pouvant être vissé avec le filetage extérieur (20) du tube interne (12) est disposé de manière bloquée en rotation dans une zone d'extrémité longitudinale (16) du tube externe (10), de manière à pouvoir tourner toutefois dans le sens périphérique (6), dans lequel par rotation de l'écrou de réglage (14) le tube interne (12) peut être ajusté par rapport au tube externe (10) dans le sens longitudinal (4), dans lequel l'élément de guidage (14) glisse dans la rainure de guidage (18), dans lequel la zone d'extrémité longitudinale (16) du tube externe (10) présente des moyens pouvant être repliés (48) qui forment un élément de blocage (46) pour l'écrou de réglage, dans lequel les moyens pouvant être repliés (48) de la zone d'extrémité longitudinale (16) du tube externe (10) sont formés par une section (50) en saillie vers l'extérieur radialement avec au moins un appendice (52) pouvant être replié vers l'intérieur radialement en venant en prise par l'arrière axialement avec l'écrou de réglage (14), **caractérisé en ce que** le tube interne (12) est un tube rond et les moyens pouvant être repliés (48) sont réalisés par soudage de sections de type bride ou sont formés d'une pièce avec le matériau du tube externe (10) par une déformation dirigée vers l'extérieur radialement.

2. Etai (2) selon la revendication 1, **caractérisé en ce que** le tube externe (10) est produit et de préférence est galvanisé à partir d'un alliage en acier et/ou **en ce que** le tube interne (12) est produit de préférence à partir d'un alliage en acier.

3. Etai (2) selon l'une quelconque ou plusieurs des revendications précédentes, **caractérisé en ce que** le filetage extérieur (20) du tube interne (12) est fabriqué dans un procédé de mise en forme sans copeaux, en particulier dans un procédé de laminage de filetage ou dans un procédé de roulage de filetage.

4. Etai (2) selon l'une quelconque ou plusieurs des revendications précédentes, **caractérisé en ce que** le tube externe (10) comprend plusieurs rainures de guidage (18), de préférence deux, trois ou quatre, s'étendant dans le sens longitudinal (4), et **en ce que** le tube interne (12) présente de manière correspondante plusieurs, de préférence deux, trois ou quatre, éléments de guidage (24) venant en prise avec lesdites rainures de guidage (18).

5. Etai (2) selon l'une quelconque ou plusieurs des revendications précédentes, **caractérisé en ce que** l'élément de guidage (24) du tube interne (12) est formé par une déformation, dirigée vers l'extérieur radialement, de matériau du tube interne (12) et/ou **en ce que** l'élément de guidage (24) est produit par incision puis par élargissement vers l'extérieur ou cintrage de matériau du tube interne (12).

6. Etai (2) selon l'une quelconque ou plusieurs des revendications précédentes, **caractérisé en ce que** l'élément de guidage (24) est réalisé dans ou sur une zone d'extrémité longitudinale (22), disposée dans le tube externe (10), du tube interne (12).

7. Etai (2) selon l'une quelconque ou plusieurs des revendications précédentes, **caractérisé en ce que** l'élément de guidage (24) est formé par au moins une tige (54) enfichée à travers une ouverture (56) dans le tube interne (12) de part en part et faisant saillie vers l'extérieur radialement.

8. Etai (2) selon l'une quelconque ou plusieurs des revendications précédentes, **caractérisé en ce que** l'écrou de réglage (14) comprend plusieurs, en particulier trois emplacements de placement d'outil (32), en particulier des surfaces de butée de marteau de type aile.

9. Etai (2) selon l'une quelconque ou plusieurs des revendications précédentes, **caractérisé en ce que** le tube externe (10) et/ou le tube interne (12) présentent un logement pour une plaque de base et/ou une plaque de tête et la plaque de base et/ou de tête sont réalisées de telle manière qu'une autre partie de base et/ou de tête peuvent y être fixées en particulier de manière centrée.
